# EUROPEAN PATENT APPLICATION

(11) **EP 4 818 888 A1**
(43) Date of publication of application: **07.10.2026**
(21) Application number: 24897063.4
(22) Date of filing: 26.09.2024
(51) Int. Cl.: G06F 8/65, B60R 16/02

(54) **CONTROL DEVICE, VEHICLE, CONTROL METHOD, PROGRAM, AND NON-TRANSITORY COMPUTER-READABLE STORAGE MEDIUM**

(30) Priority: 29.11.2023 JP 2023201729
(71) Applicant: TOYOTA JIDOSHA KABUSHIKI KAISHA, Toyota-Shi, Aichi-Ken 471-8571 (JP)
(72) Inventor: MASUDA Katsuhiro, Toyota-shi, Aichi 471-8571 (JP)
(74) Representative: J A Kemp LLP
(86) International application number: PCT/JP2024/034545
(87) International publication number: WO 2025/115373

(57) **Abstract**

A control device controls a display unit that displays information relating to a software update of an in-vehicle device mounted on a vehicle having multiple power modes. The software update includes an activation process. When the software update is performed according to a first update procedure in which the activation process is executed in response to switching between the power modes in accordance with a first switching pattern, the control device causes the display unit to display a first confirmation image before the activation process is started. When the software update is performed according to a second update procedure in which the activation process is executed in response to switching between the power modes in accordance with a second switching pattern, the control device causes the display unit to display a second confirmation image before the activation process is started.

## Description

### TECHNICAL FIELD

The present disclosure relates to a control device that performs display control of information relating to software updates of in-vehicle devices. The present disclosure further relates to a vehicle, a control method, a program, and a non-transitory computer-readable storage medium associated with the display control.

### BACKGROUND ART

Vehicles are equipped with various in-vehicle devices that operate by executing software. Over-The-Air (OTA) technology for updating software of in-vehicle devices using software downloaded from outside the vehicle via wireless communication is known. As described in Patent Literature 1, software updating is performed through an installation process in which downloaded update software is written into a storage module of the in-vehicle device, and an activation process in which the installed update software is activated.

### CITATION LIST

### Patent Literature

Patent Literature 1: JP2022-163396A

### SUMMARY OF INVENTION

### Technical Problem

When the activation process is executed, certain functions of the vehicle may be restricted. Accordingly, it is desirable to obtain confirmation from the user before starting the activation process. The activation process may be executed at different points in time depending on the type of the in-vehicle device or the type of the software. In such cases, the point in time at which vehicle functional restrictions occur varies depending on when the activation process is executed. Therefore, it is desirable to display an appropriate confirmation screen corresponding to the point in time at which the activation process is executed.

### Solution to Problem

In accordance with one aspect of the present disclosure, a control device including processing circuitry is provided. The processing circuitry is configured to control a display unit configured to display information relating to a software update of an in-vehicle device mounted on a vehicle configured to selectively switch among multiple power modes, the software update including an activation process of enabling update software installed in the in-vehicle device. The processing circuitry is configured to cause, when the software update is performed according to a first update procedure in which the activation process is executed in response to switching between the power modes in accordance with a first switching pattern, the display unit to display a first confirmation image before the activation process is started. The processing circuitry is configured to cause, when the software update is performed according to a second update procedure in which the activation process is executed in response to switching between the power modes in accordance with a second switching pattern, the display unit to display a second confirmation image before the activation process is started. The first switching pattern and the second switching pattern are different from each other, and the first confirmation image and the second confirmation image are different from each other.

In accordance with another aspect of the present disclosure, a vehicle including the above-described control device is provided.

In accordance with yet another aspect of the present disclosure, a control method is provided that includes: controlling a display unit that displays progress information relating to a software update of an in-vehicle device mounted on a vehicle configured to selectively switch among multiple power modes, the software update including an activation process of enabling update software installed in the in-vehicle device; causing, when the software update is performed according to a first update procedure in which the activation process is executed in response to switching between the power modes in accordance with a first switching pattern, the display unit to display a first confirmation image before the activation process is started; and causing, when the software update is performed according to a second update procedure in which the activation process is executed in response to switching between the power modes in accordance with a second switching pattern, the display unit to display a second confirmation image before the activation process is started. The first switching pattern and the second switching pattern are different from each other, and the first confirmation image and the second confirmation image are different from each other.

In accordance with a further aspect of the present disclosure, a program is provided that causes, when executed by a control device, the control device to execute: a control process of controlling a display unit that displays progress information relating to a software update of an in-vehicle device mounted on a vehicle configured to selectively switch among multiple power modes, the software update including an activation process of enabling update software installed in the in-vehicle device; a first display process of causing, when the software update is performed according to a first update procedure in which the activation process is executed in response to switching between the power modes in accordance with a first switching pattern, the display unit to display a first confirmation image before the activation process is started; and a second display process of causing, when the software update is performed according to a second update procedure in which the activation process is executed in response to switching between the power modes in accordance with a second switching pattern, the display unit to display a second confirmation image before the activation process is started. The first switching pattern and the second switching pattern are different from each other, and the first confirmation image and the second confirmation image are different from each other.

In another general aspect of the present disclosure, a non-transitory computer-readable storage medium that stores the above-described program is provided.

### BRIEF DESCRIPTION OF DRAWINGS

[Fig. 1] A schematic diagram illustrating a configuration of a control device and a vehicle according to a first embodiment.
[Fig. 2] A schematic diagram illustrating a configuration of an in-vehicle device including a single-bank storage module.
[Fig. 3] A schematic diagram illustrating a configuration of an in-vehicle device including a dual-bank storage module.
[Fig. 4] A sequence diagram illustrating a flow of processes in an activation phase when software is updated according to a first update procedure in the first embodiment.
[Fig. 5] A diagram illustrating an example of display of a first preliminary confirmation image.
[Fig. 6] A diagram illustrating an example of display of a first final confirmation image.
[Fig. 7] A diagram illustrating an example of display of a first guidance image.
[Fig. 8] A diagram illustrating an example of display of a first completion notification image.
[Fig. 9] A sequence diagram illustrating a flow of processes in an activation phase when software is updated according to a second update procedure in the first embodiment.
[Fig. 10] A diagram illustrating an example of display of a second preliminary confirmation image.
[Fig. 11] A diagram illustrating an example of display of a second final confirmation image.
[Fig. 12] A diagram illustrating an example of display of a second guidance image.
[Fig. 13] A diagram illustrating an example of display of a second completion notification image.
[Fig. 14] A sequence diagram illustrating a flow of processes in an activation phase when software is updated according to a first update procedure in the second embodiment.
[Fig. 15] A sequence diagram illustrating a flow of processes in an activation phase when software is updated according to a second update procedure in the second embodiment.

### DESCRIPTION OF EMBODIMENTS

### First Embodiment

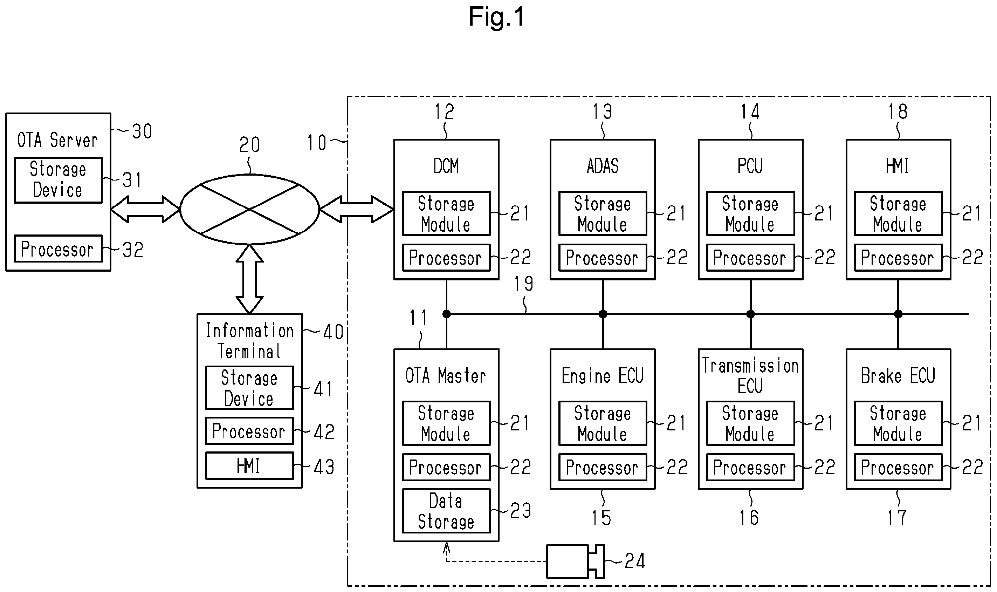

A control device, a vehicle including the control device, a control method, a program (program product), and a non-transitory computer-readable storage medium according to a first embodiment will now be described with reference to Figs. 1 to 13. The control method is a method executed by the control device. The program causes the control device to execute the control method. The non-transitory computer-readable storage medium stores the program.

### Configuration of Vehicle and Control Device

The configuration of a vehicle and a control device in accordance with the present embodiment will now be described with reference to Fig. 1. As illustrated in Fig. 1, a vehicle 10 is equipped with in-vehicle devices such as an over-the-air (OTA) master 11, a data communication module (DCM) 12, an advanced driver assistance system (ADAS) 13, a power control unit (PCU) 14, an engine ECU 15, a transmission ECU 16, a brake ECU 17, and a human machine interface (HMI) 18. The in-vehicle devices are connected in a manner allowing for communication with one another through an in-vehicle network 19. The OTA master 11 manages software updates of in-vehicle devices, including itself. The DCM 12 is a data communication module that provides a wireless communication function with outside the vehicle via a mobile communication network 20. In the present embodiment, the DCM 12 has a function of recording results of self-diagnosis performed in the respective in-vehicle devices of the vehicle 10 and transmitting the results to an external data center or the like. The ADAS 13 provides advanced driver assistance functions such as an automatic braking device and a sudden-start prevention device. The PCU 14 controls electric power in the vehicle. The engine ECU 15 controls the engine. The transmission ECU 16 controls the transmission. The brake ECU 17 controls the brake. The HMI 18 includes an input device, which undergoes input operations performed by a vehicle occupant, and a display device, which presents information to the vehicle occupant through images and sound. The HMI 18 may be configured to include a navigation function that guides a travel route and an entertainment function that reproduces music and video. Each of these in-vehicle devices includes a storage module 21 storing software and a processor 22 that executes the software. The OTA master 11 further includes a data storage 23 that stores update software acquired from outside the vehicle.

The vehicle 10 is operated in multiple power modes. The power modes include a driving power mode and a parking power mode. For each power mode, the in-vehicle devices that are to be powered on are predetermined. When the driving power mode is set, power is supplied to in-vehicle devices required for traveling of the vehicle 10 and for providing services during traveling. In the present embodiment, when the driving power mode is set, all of the in-vehicle devices illustrated in Fig. 1 are powered on. When the parking power mode is set, power is supplied only to in-vehicle devices that need to operate while the vehicle 10 is parked. The in-vehicle devices powered on in each power mode may be changed depending on an environment and user settings.

The vehicle 10 is provided with a power switch 24 for switching between the driving power mode and the parking power mode. Switching from the driving power mode to the parking power mode is performed in response to switching of the power switch 24 from on to off. Switching from the parking power mode to the driving power mode is performed in response to switching of the power switch 24 from off to on. In a conventional vehicle that uses only an engine as a drive source, the power switch 24 may be referred to as an ignition switch. Further, in a vehicle capable of electric traveling, such as a battery electric vehicle (BEV) or a plug-in hybrid electric vehicle (PHEV), the power switch 24 may be referred to as a Ready switch.

The vehicle 10 is connected to an OTA server 30 via the mobile communication network 20. The OTA server 30 is a server device that distributes update software for in-vehicle devices. The OTA server 30 includes a storage device 31 that stores programs and data for distributing update software, and a processor 32 that executes a distribution program.

The OTA server 30 is capable of communicating with an information terminal 40 of a user of the vehicle 10 via the mobile communication network 20. Examples of the information terminal 40 include a smartphone. The information terminal 40 may be a tablet terminal or a PC terminal. The information terminal 40 includes a storage device 41, a processor 42, and an HMI 43. The processor 42 reads and executes software stored in the storage device 41. The HMI 43 includes an input device that receives a user operation and a display device that displays information to the user. The software stored in the storage device 41 includes software that provides functions such as checking information of the vehicle 10 owned by the user and remotely operating the vehicle 10.

### Outline of Software Update

Next, an overview of software update of in-vehicle devices in the vehicle 10 will be described. The in-vehicle devices to be updated include the OTA master 11, the DCM 12, the ADAS 13, the PCU 14, the engine ECU 15, the transmission ECU 16, the brake ECU 17, and the HMI 18. The software update is performed through a download phase, an installation phase, and an activation phase.

In the download phase, update software is transmitted from the OTA server 30 to the vehicle 10. The OTA master 11 stores, in the data storage 23, the update software received from the OTA server 30. The download phase includes a series of processes relating to downloading, such as determining whether downloading is to be executed and verifying update data. Transmission of update software from the OTA server 30 to the OTA master 11 may be performed by transmitting compressed data obtained by compressing the update software, or by transmitting divided data obtained by dividing the update software or the compressed data. Further, update software for multiple in-vehicle devices may be transmitted together.

In the installation phase, update software is installed in an in-vehicle device to be updated. In the installation phase, the OTA master 11 installs the update software into the storage module 21 of the in-vehicle device to be updated based on update data downloaded to the data storage 23. The installation phase includes a series of processes relating to installation, such as determining whether installation is to be executed, transferring update data, and verifying the update software. When the update data includes the update software itself, the OTA master 11 transfers the update data to the in-vehicle device to be updated in the installation phase. When the update data includes compressed data of the update software, differential data, or divided data, a process of generating the update software from the update data is executed. The generation process may be executed by the OTA master 11, or may be executed by the in-vehicle device to be updated. The update software can be generated by decompressing the compressed data or assembling the differential data or the divided data. At completion of the installation phase, the update software is disabled.

In the activation phase, activation of the update software, that is, enabling of the update software, is performed in the in-vehicle device to be updated. The activation phase includes a series of processes relating to activation, such as determining whether activation is to be executed, checking consistency of the update software, and verifying an execution result of activation.

### Two Types of Software Update Procedures

There are two types of procedures for updating software of an in-vehicle device: a first update procedure and a second update procedure. In both the first update procedure and the second update procedure, software update is performed in a common procedure up to completion of the installation phase. The first update procedure and the second update procedure differ in the point in time at which the activation process in the activation phase is started. The activation process is a process of enabling update software installed in the storage module 21 of the in-vehicle device to be updated.

In the first update procedure, the activation process is executed in response to switching of the power switch 24 from on to off. That is, in the first update procedure, the activation process is executed in response to switching from the driving power mode to the parking power mode. When the software update is performed according to the first update procedure, switching the power switch 24 on again is prohibited during a period from start to completion of the activation process. In other words, when the software update is performed according to the first update procedure, switching to the driving power mode is prohibited during a period from start to completion of the activation process.

In contrast, in the second update procedure, the activation process is executed in response to switching of the power switch 24 from off to on. That is, in the second update procedure, the activation process is executed in response to switching from the parking power mode to the driving power mode. Specifically, in the second update procedure, the activation process is started in response to switching of the power switch 24 from off to on. Then, after waiting for completion of the activation process, the power mode is switched from the parking power mode to the driving power mode.

Which of the first update procedure and the second update procedure is used to perform software updating is classified, for example, based on the type of the in-vehicle device, hardware configuration, and type of the software. Which of the first update procedure and the second update procedure is used to perform software updating may be determined based on, for example, environmental conditions, user settings, or a combination of other in-vehicle devices for which the activation process is executed simultaneously.

When software updating is performed according to the first update procedure, it is necessary to supply power to the in-vehicle device undergoing the activation process even while the vehicle 10 is parked. Therefore, an in-vehicle device for which software updating is performed according to the first update procedure needs to be connected to a dedicated power line for supplying power while the vehicle is parked. In contrast, by performing software updating of an in-vehicle device according to the second update procedure, the need for a dedicated power line can be eliminated.

However, for some in-vehicle devices, it may be desirable to perform software updating according to the first update procedure rather than the second update procedure. In the first update procedure, when the power switch 24 is switched on again after being switched from on to off, the activation process has already been completed. Thus, in this case, the in-vehicle device to be updated can start operating immediately after the power switch 24 is switched from off to on. In contrast, in the second update procedure, the activation process is started after the power switch 24 is switched from off to on. Therefore, even if the user switches the power switch 24 from off to on to start traveling of the vehicle 10, the in-vehicle device to be updated cannot start operating until the activation process is completed. In contrast, by performing software updating of an in-vehicle device according to the first update procedure, the in-vehicle device can start operating immediately after the power switch 24 of the vehicle 10 is switched from off to on.

In the present embodiment, the DCM 12, the ADAS 13, and the PCU 14 are classified as in-vehicle devices for which software updating is performed according to the first update procedure. The communication function provided by the DCM 12 is used to notify an external entity of an abnormality occurring in the vehicle 10. Further, in the present embodiment, the DCM 12 has a role of recording results of self-diagnosis of the respective in-vehicle devices. It is desirable that functions of the DCM 12, such as abnormality notification and recording of self-diagnosis results, be available immediately after the power switch 24 is switched from off to on. Further, the ADAS 13 needs to provide driving assistance starting at the point in time at which the vehicle 10 starts traveling. Further, while operation of the PCU 14 is stopped, power cannot be supplied to a drive system, and thus the vehicle 10 cannot start traveling. As described above, the DCM 12, the ADAS 13, and the PCU 14 are in-vehicle devices that are required to start operating immediately after the power switch 24 is switched from off to on.

Depending on the hardware configuration of the storage module 21 provided in an in-vehicle device, software updating according to the first update procedure may also be required. In the present embodiment, among the in-vehicle devices other than the DCM 12, the ADAS 13, and the PCU 14 described above, in-vehicle devices including a single-bank storage module 21 are classified as in-vehicle devices for which software updating is performed according to the first update procedure. Among the in-vehicle devices other than the DCM 12, the ADAS 13, and the PCU 14, in-vehicle devices including a dual-bank storage module 21 are classified as in-vehicle devices for which software updating is performed according to the second update procedure.

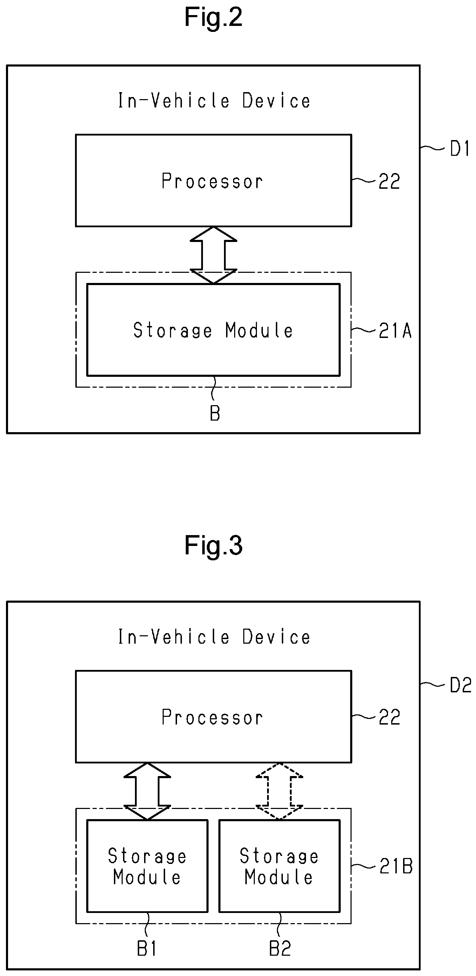

Fig. 2 illustrates a configuration of an in-vehicle device D1 including a single-bank storage module 21A. The storage module 21A of the in-vehicle device D1 has only one storage region B that stores software executed by the processor 32. In such an in-vehicle device D1, update software is installed in the same storage region B that stores software before the update. Therefore, operation of the in-vehicle device D1 needs to be stopped even while installation is being performed. Further, to recover from a failure in activation, it is necessary to reinstall the software before the update into the storage region B. Such reinstallation for recovery requires a long period of time. Further, if the software before the update is not backed up, it is necessary to re-download the software before the update. As described above, in the in-vehicle device D1 including the single-bank storage module 21A, considering recovery upon failure, it may take a very long time from start of activation until the in-vehicle device D1 becomes able to start operating. Therefore, in the present embodiment, the in-vehicle device D1 including the single-bank storage module 21A is updated according to the first update procedure. In the present embodiment, an in-vehicle device for which software updating is performed according to the first update procedure has its power turned on and off in conjunction with on/off operation of the power switch 24 of the vehicle 10.

Fig. 3 illustrates a configuration of an in-vehicle device D2 including a dual-bank storage module 21B. The dual-bank storage module 21B has two storage regions B1 and B2. One of the two storage regions B1 and B2 is disabled, and the other is enabled. The processor 22 reads software from the enabled storage region and executes the software. In such an in-vehicle device D2, update software is installed in the disabled storage region; that is, in a storage region different from the storage region storing software before the update. After installation, activation is performed by switching which storage region is to be enabled. If activation fails, switching the storage region to be enabled again enables recovery to the state before the update in a short time. Therefore, in the in-vehicle device D2 including the dual-bank storage module 21B, even taking recovery upon failure into account, it does not take an excessively long time from start of activation until the in-vehicle device D2 becomes able to start operating. Accordingly, in the present embodiment, software updating according to the second update procedure is performed only for the in-vehicle device D2 including the dual-bank storage module 21B.

In many in-vehicle devices, multiple pieces of software that provide different functions may be installed. Among the multiple pieces of software, there may be software that needs to be executed immediately after switching of the power switch 24 from off to on, and software that does not need to be executed immediately. In the case of software that needs to be executed immediately after switching of the power switch 24 from off to on, if updating is performed according to the second update procedure, execution may not be ready in time. Therefore, even within the same in-vehicle device, it may be determined, depending on the type of software to be updated, whether updating is to be performed according to the first update procedure or according to the second update procedure.

The OTA master 11 determines, at least by the start of the activation phase, whether the software update is to be performed according to the first update procedure or the second update procedure. For example, the OTA master 11 performs the determination based on campaign information. In this case, the campaign information includes information indicating whether the update procedure for the software update is the first update procedure or the second update procedure. The determination may alternatively be performed in the following manner. First, classification information indicating types of in-vehicle devices or types of software to be updated according to the first update procedure and types of in-vehicle devices or types of software to be updated according to the second update procedure is stored in advance in the storage module 21 of the OTA master 11. When performing a software update, the OTA master 11 acquires the type of the in-vehicle device or the type of the software to be updated from the campaign information or from the in-vehicle device to be updated. The OTA master 11 then refers to the classification information stored in the storage module 21 to determine which update procedure the acquired type is classified under.

### Activation Process in the First Update Procedure

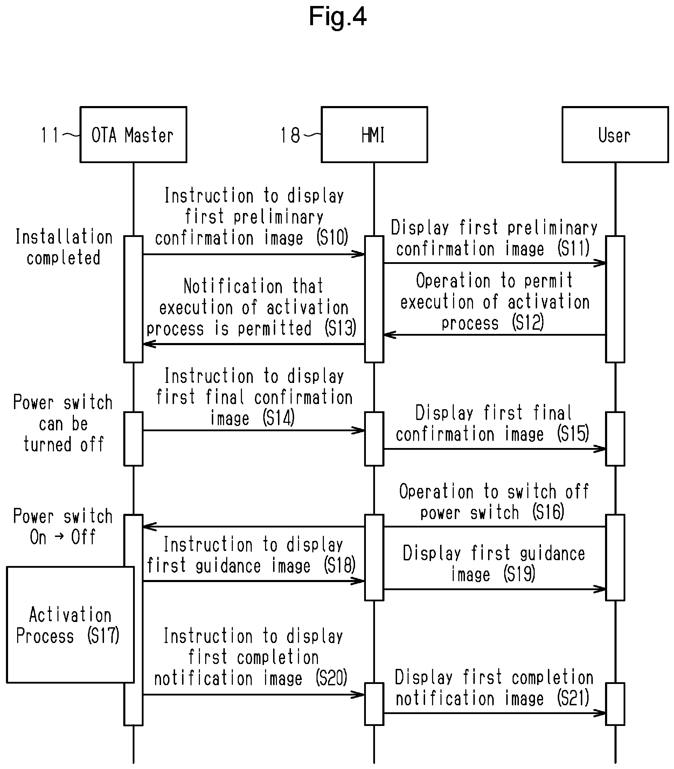

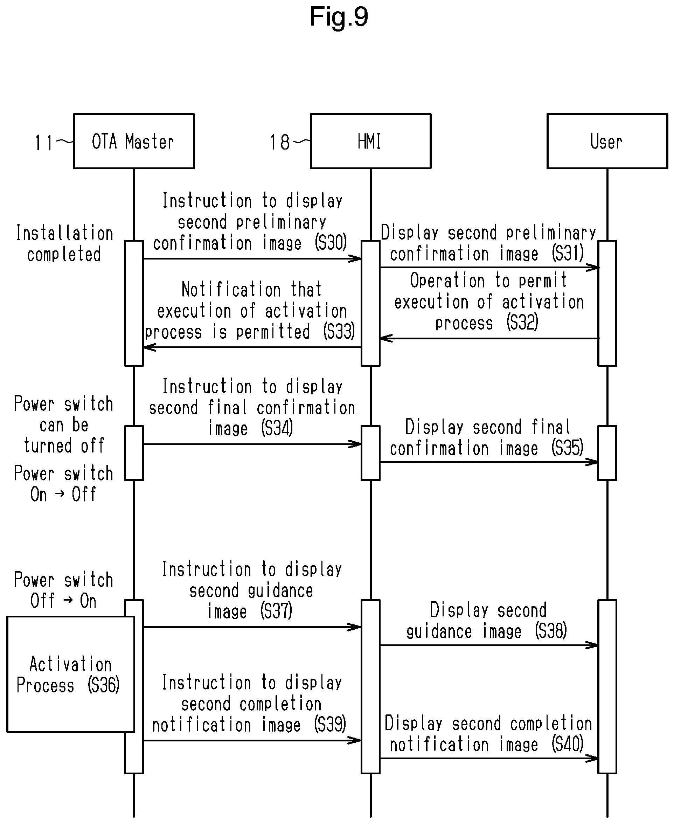

Next, details of the activation process in the first update procedure will be described with reference to Figs. 4 to 8. The storage module 21 of the OTA master 11 stores a program for managing software updates and a program for controlling display of information relating to software updates. The processing of the OTA master 11 shown in Fig. 4 and Fig. 9 described later is executed by the processor 22 of the OTA master 11 reading and executing these programs.

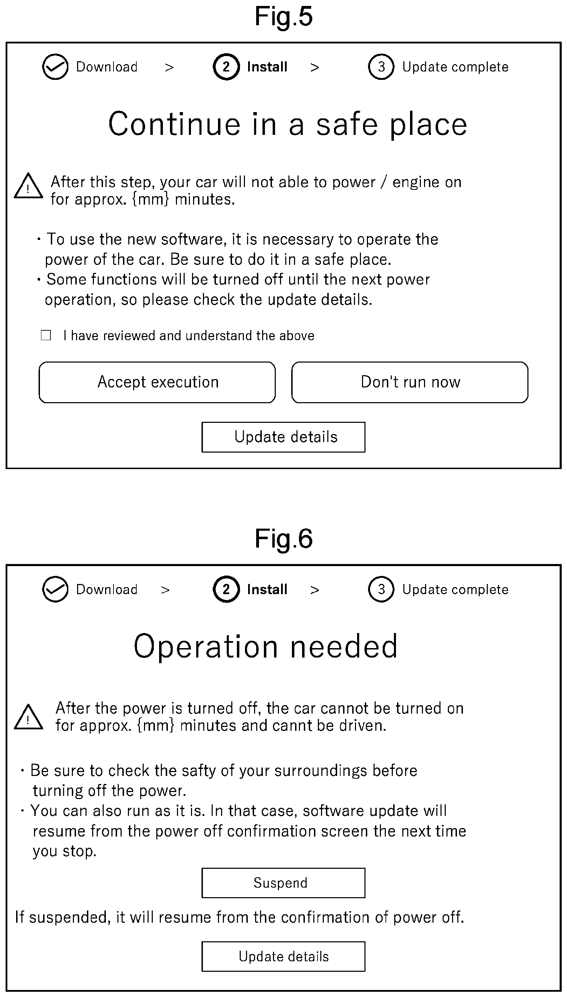

Fig. 4 illustrates a flow of processes in the activation phase when software update is performed according to the first update procedure. When the installation phase is completed, the OTA master 11 instructs the HMI 18 to display a first preliminary confirmation image for obtaining a user indication as to whether the activation process is to be executed (S10). In response to the instruction, the HMI 18 displays the first preliminary confirmation image as illustrated in Fig. 5 (S11).

Fig. 5 illustrates an example of display of the first preliminary confirmation image. The first preliminary confirmation image includes an acceptance display for a selection operation indicating whether execution of the activation process is permitted. Specifically, the first preliminary confirmation image displays a button for selecting permission to execute the activation process and a button for selecting postponement of execution of the activation process. Operation of these buttons is disabled while the vehicle 10 is traveling and enabled only while the vehicle 10 is parked.

The first preliminary confirmation image further displays information indicating functional restrictions of the vehicle 10 associated with execution of the activation process. Specifically, information indicating that the power switch 24 cannot be switched on again during the activation process is displayed as information indicating the functional restriction. This information indicates that switching to the driving power mode is not permitted. In addition, the first preliminary confirmation image displays information indicating a predicted time for the activation process. The predicted time for the activation process is a predicted value of a time required from when the power switch 24 is switched from on to off until the activation process is completed and the power switch 24 becomes switchable on again. The OTA master 11 acquires the predicted time, for example, from campaign information. Alternatively, the OTA master 11 may calculate the predicted time based on a data size of the update software, the type of the in-vehicle device to be updated, or the like.

The first preliminary confirmation image further displays information such as cautions to the user in association with execution of the activation process. Examples of the cautions include that the power switch 24 needs to be switched off to perform the software update, that activation should be performed in a safe location, and that some functions of the vehicle 10 may be disabled when the power switch 24 is next switched on.

When the user selects permission to execute the activation process on the HMI 18 displaying the first preliminary confirmation image (S12), the HMI 18 notifies the OTA master 11 that execution of the activation process has been permitted (S13). After confirming that permission to execute the activation process has been granted, the OTA master 11 instructs the HMI 18 to display a first final confirmation image when switching of the power switch 24 from on to off becomes possible (S14). In response to the instruction, the HMI 18 displays the first final confirmation image as illustrated in Fig. 6 (S15). The OTA master 11 determines that switching of the power switch 24 from on to off is possible based on conditions such as that the vehicle 10 is stopped, that a shift operation to a parking position has been performed, and that a parking brake is engaged.

Fig. 6 illustrates an example of the first final confirmation image. The first final confirmation image displays, similarly to the first preliminary confirmation image, information indicating functional restrictions of the vehicle 10 associated with execution of the activation process. Specifically, the first final confirmation image displays information indicating that, when the power switch 24 is switched off, the vehicle 10 cannot be driven by switching the power switch 24 on again until completion of the activation process. The first final confirmation image further displays information indicating the predicted time for the activation process. The first final confirmation image also displays information indicating that the power switch 24 should be switched off after confirming that the vehicle 10 is in a safe location, that traveling can be resumed and, in that case, the software update will be resumed upon display of the first final confirmation image at the next stop, and the like. In addition, the first final confirmation image displays an acceptance display for temporarily suspending the software update. If the user does not select suspension of the software update in the first final confirmation image, the activation phase is continued. If the user selects suspension of the software update in the first final confirmation image, the activation phase is temporarily stopped. The activation phase is resumed when the vehicle 10 next enters a state in which its power can be switched off.

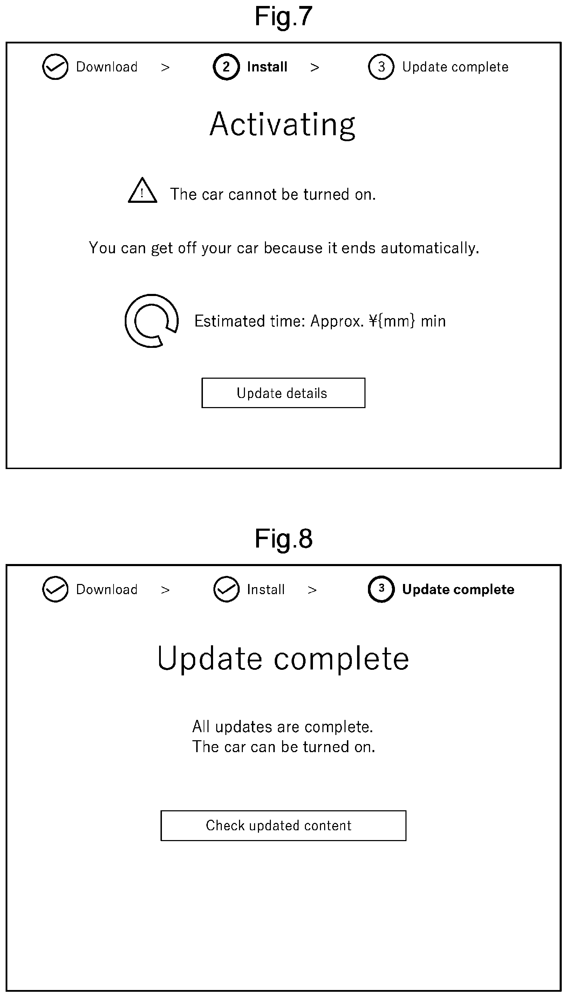

If the processing of the activation phase is continued and the user thereafter switches the power switch 24 from on to off (S16), the OTA master 11 starts the activation process (S17). At the same time, the OTA master 11 instructs the HMI 18 to display a first guidance image as illustrated in Fig. 7 (S18). In response to the instruction, the HMI 18 displays the first guidance image (S19).

As illustrated in Fig. 7, the first guidance image displays information indicating that switching of the power switch 24 to on is not permitted and information indicating a predicted time until switching of the power switch 24 to on becomes permitted. The OTA master 11 calculates the predicted time to be displayed in the first guidance image by subtracting an elapsed time from start of the activation process to a present time from a predicted value of a time required from start to completion of the activation process. The HMI 18 temporarily darkens the screen in response to locking of the vehicle 10 or passage of a predetermined time, and displays the first guidance image again in response to unlocking of the vehicle 10 or operation of the HMI 18.

When the activation process is completed, the OTA master 11 instructs the HMI 18 to display a first completion notification image as illustrated in Fig. 8 (S20). In response to the instruction, the HMI 18 displays the first completion notification image (S21). As illustrated in Fig. 8, the first completion notification image displays information indicating that the software update has been completed and information indicating that switching of the power switch 24 to on has become permitted.

### Activation Process in Second Update Procedure

Next, details of the activation process in the second update procedure will be described with reference to Figs. 9 to 11. Fig. 9 illustrates a flow of processes in the activation phase when software update is performed according to the second update procedure.

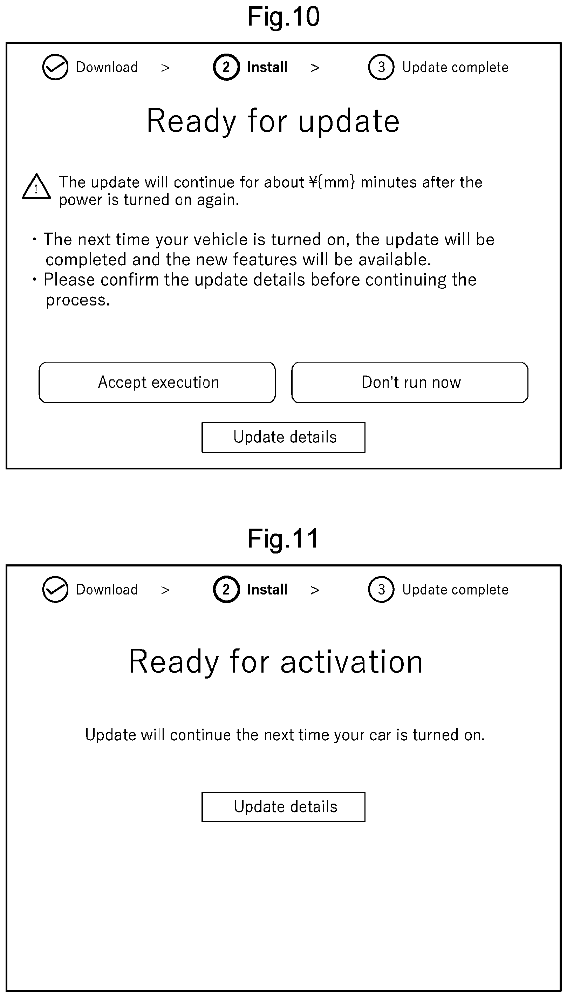

In this case, when the installation phase is completed, the OTA master 11 instructs the HMI 18 to display a second preliminary confirmation image for obtaining a user indication as to whether the activation process is to be executed (S30). In response to the instruction, the HMI 18 displays the second preliminary confirmation image as illustrated in Fig. 10 (S31).

Fig. 10 illustrates an example of the second preliminary confirmation image. The second preliminary confirmation image includes an acceptance display for a selection operation indicating whether execution of the activation process is permitted, similarly to the first preliminary confirmation image. The second preliminary confirmation image further displays that the activation process will be executed when the power switch 24 is next switched on. In addition, the second preliminary confirmation image displays information indicating a predicted time from when the power switch 24 is switched from off to on until completion of the activation process.

When the user selects permission to execute the activation process on the HMI 18 displaying the second preliminary confirmation image (S32), the HMI 18 notifies the OTA master 11 that execution of the activation process has been permitted (S33). After confirming that permission to execute the activation process has been granted, the OTA master 11 instructs the HMI 18 to display a second final confirmation image when the vehicle 10 enters a state in which its power can be switched from on to off (S34). In response to the instruction, the HMI 18 displays the second final confirmation image as illustrated in Fig. 11 (S35).

Fig. 11 illustrates an example of the second final confirmation image. The second final confirmation image displays information indicating that preparation for the activation process has been completed and information indicating that the software update will be resumed when the power switch 24 is next switched from off to on.

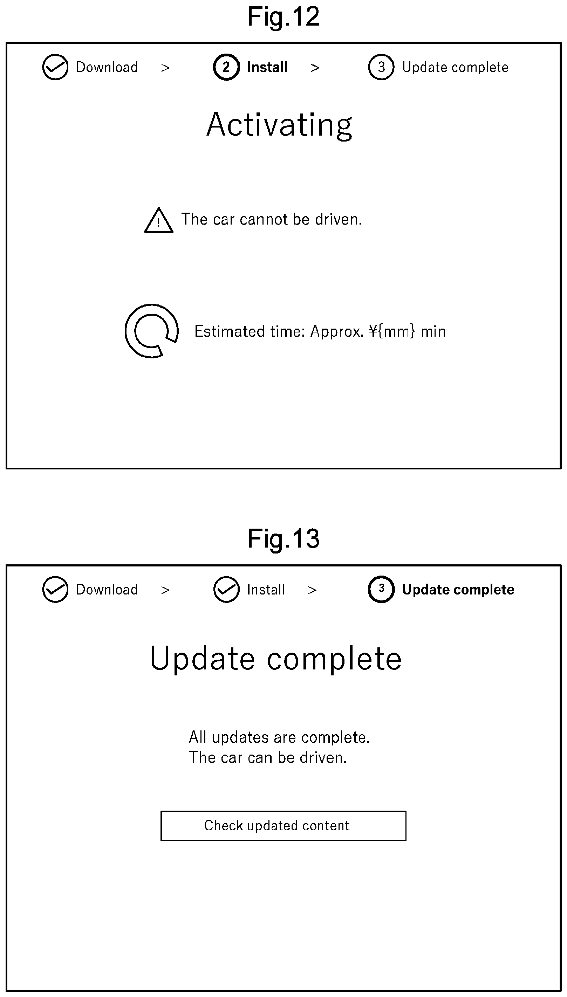

Thereafter, when the power switch 24 is switched from on to off and then switched on again, the OTA master 11 starts the activation process (S36). In addition, the OTA master 11 instructs the HMI 18 to display a second guidance image as illustrated in Fig. 12 (S37). In response to the instruction, the HMI 18 displays the second guidance image (S38).

As illustrated in Fig. 12, the second guidance image displays information indicating that the software update is in progress and information indicating a predicted time until completion of the update. The OTA master 11 calculates the predicted time to be displayed in the second guidance image by subtracting an elapsed time from start of the activation process to a present time from a predicted value of a time required from start to completion of the activation process.

When the activation process is completed, the OTA master 11 instructs the HMI 18 to display a second completion notification image as illustrated in Fig. 13 (S39). In response to the instruction, the HMI 18 displays the second completion notification image (S40). As illustrated in Fig. 13, the second completion notification image displays information indicating that the software update has been completed. The second completion notification image displays information indicating that functional restrictions associated with execution of the activation process have been lifted. For example, when traveling of the vehicle 10 has been prohibited during execution of the activation process, information indicating that the vehicle 10 has become able to travel is displayed in the second completion notification image.

### Operation and Advantages of the Embodiment

The OTA master 11 controls display of the HMI 18 to display information relating to software updates of in-vehicle devices mounted on the vehicle 10. Software updates of the in-vehicle devices are performed according to either the first update procedure or the second update procedure. In the first update procedure, the activation process for enabling update software installed in an in-vehicle device is executed in response to switching from the driving power mode to the parking power mode. In the second update procedure, the activation process is executed in response to switching from the parking power mode to the driving power mode. When the software update is performed according to the first update procedure, the OTA master 11 causes the HMI 18 to display the first preliminary confirmation image and the first final confirmation image before start of the activation process. In contrast, when the software update is performed according to the second update procedure, the OTA master 11 causes the HMI 18 to display, before start of the activation process, the second preliminary confirmation image and the second final confirmation image, which are different from the first preliminary confirmation image and the first final confirmation image, respectively.

When the software update is performed according to the first update procedure and when the software update is performed according to the second update procedure, the point in time at which functions of the vehicle 10 are restricted due to the activation process and the content of such restrictions differ. Accordingly, merely notifying the user that the activation process will be executed may result in unexpected functional restrictions, which may cause confusion to the user. In the present embodiment, the user can ascertain whether the software update will be performed according to the first update procedure or the second update procedure based on differences between the confirmation images displayed on the HMI 18 prior to initiation of the activation process.

According to the control device, the vehicle, the control method, the program, and the non-transitory computer-readable storage medium of the present embodiment described above, the following advantages are achieved.
(1) The confirmation image displayed on the HMI 18 prior to initiation of the activation process differs depending on whether the software update is performed according to the first update procedure or the second update procedure. Accordingly, the present embodiment displays an appropriate confirmation screen in accordance with the point in time at which the activation process is executed.
(2) The user can determine whether to execute the activation process after confirming the point in time at which it will be executed. This improves user convenience.
(3) When the point in time of execution of the activation process differs, the point in time and content of functional restrictions of the vehicle 10 associated with such execution also differ. In this regard, the OTA master 11 displays information indicating functional restrictions of the vehicle 10 associated with execution of the activation process in the first preliminary/final confirmation image. Further, the OTA master 11 displays, in the second preliminary/final confirmation image, information different from that displayed in the first preliminary/final confirmation image as information indicating functional restrictions. Accordingly, functional restrictions of the vehicle 10 associated with execution of the activation process can be accurately communicated to the user.
(4) The OTA master 11 displays, in the first preliminary/final confirmation image, information regarding a period during which functions of the vehicle 10 are restricted due to execution of the activation process. Further, the OTA master 11 displays, in the second preliminary confirmation image, information regarding a period different from the period displayed in the first preliminary/final confirmation image as information regarding the period during which functions of the vehicle 10 are restricted. Accordingly, the period during which functions of the vehicle 10 are restricted due to execution of the activation process can be accurately communicated to the user.
(5) The OTA master 11 displays, in the first preliminary/final confirmation image, information regarding an estimated time from when the power switch 24 is switched from on to off until it becomes possible to switch the power switch 24 on again. Accordingly, the user can determine whether to execute the activation process after confirming the period during which the power switch 24 cannot be turned on due to execution of the activation process.
(6) The OTA master 11 displays, in the second preliminary confirmation image, information regarding an estimated time from when the power switch 24 is switched from off to on until completion of the activation process. Accordingly, when the user next drives the vehicle 10, the user can determine whether to execute the activation process after confirming the period during which functional restrictions will occur due to the activation process.
(7) The first preliminary/final confirmation image and the second preliminary confirmation image include an acceptance display for a selection operation as to whether to permit initiation of the activation process. Accordingly, the user can determine whether to execute the activation process while confirming the point in time of the activation process and the content and point in time of functional restrictions associated with execution thereof.
(8) The content of functional restrictions of the vehicle 10 resulting from execution of the activation process differs between execution of the activation process according to the first update procedure and execution according to the second update procedure. Accordingly, merely recognizing that the activation process is in progress may not allow the user to fully understand the situation. In this regard, when the software update is performed according to the first update procedure, the OTA master 11 causes the HMI 18 to display the first guidance image during execution of the activation process. When the software update is performed according to the second update procedure, the OTA master 11 causes the HMI 18 to display the second guidance image, different from the first guidance image, during execution of the activation process. Accordingly, the user can readily understand the effects of the activation process.
(9) The OTA master 11 displays, in the first guidance image, information indicating that switching the power switch 24 to on is not permitted; that is, that switching to the driving power mode is not permitted. Further, the OTA master 11 displays, in the first guidance image, information regarding an estimated time until the power switch 24 can be switched to on. Accordingly, the user can readily understand the situation.
(10) The OTA master 11 displays, in the second guidance image, information regarding an estimated time until completion of the activation process. Accordingly, the user can understand when functions of the updated software will become available.
(11) When the software update is performed according to the first update procedure and when the software update is performed according to the second update procedure, the functions of the vehicle 10 for which restrictions are lifted upon completion of the activation process differ. In this regard, when the software update is performed according to the first update procedure, the OTA master 11 causes the HMI 18 to display the first completion notification image after completion of the activation process. When the software update is performed according to the second update procedure, the OTA master 11 causes the HMI 18 to display the second completion notification image, different from the first completion notification image, after completion of the activation process. Specifically, the OTA master 11 displays, in the first completion notification image, that switching the power switch 24 to on has become possible, while displaying in the second completion notification image, that functions of the in-vehicle device that were restricted due to execution of the activation process have become available. Accordingly, the user can readily understand the functions of the vehicle 10 for which restrictions are lifted upon completion of the activation process.
(12) The DCM 12, the ADAS 13, and the PCU 14 are required to start operating immediately after the power switch 24 is switched from off to on. In the present embodiment, software updates for the DCM 12, the ADAS 13, and the PCU 14 are performed according to the first update procedure, in which the activation process is executed while the power switch 24 is off. Accordingly, execution of the activation process does not prolong the time from when the power switch 24 is switched from off to on until the DCM 12, the ADAS 13, and the PCU 14 start operating. Thus, in the present embodiment, in-vehicle devices for which software updates are performed according to the first update procedure and in-vehicle devices for which software updates are performed according to the second update procedure are classified based on functions of the in-vehicle devices.
(13) The in-vehicle device D1, including the single-bank storage module 21A, requires a longer time for the activation process than the in-vehicle device D2, including the dual-bank storage module 21B. Accordingly, if the activation process is started after the power switch 24 is switched from off to on, functions of the in-vehicle device D1 may be unavailable for an extended period until completion of the activation process. In contrast, in the present embodiment, among in-vehicle devices other than the DCM 12, the ADAS 13, and the PCU 14, the in-vehicle device D1, including the single-bank storage module 21A, performs a software update according to the first update procedure. Among the other in-vehicle devices, the in-vehicle device D2, including the dual-bank storage module 21B, performs a software update according to the second update procedure. Accordingly, it is possible to avoid a prolonged continuation of functional restrictions of the in-vehicle device after the power switch 24 is switched from off to on due to execution of the activation process.
(14) When the software update is performed according to the first update procedure, the OTA master 11 starts the activation process of the in-vehicle device in response to the power switch 24 being switched from on to off. When the software update is performed according to the second update procedure, the OTA master 11 starts the activation process of the in-vehicle device in response to the power switch 24 being switched from off to on. Thus, in the present embodiment, the OTA master 11, which manages the software update, performs display control of information. Accordingly, information is appropriately displayed in accordance with progress of the software update.
(15) The OTA master 11 causes the HMI 18 to display the first preliminary/second confirmation image when the installation phase is completed. Further, the OTA master 11 causes the HMI 18 to display the first/second final confirmation image when the vehicle 10 subsequently enters a state in which the power switch 24 can be switched from on to off. Accordingly, the user can readily recognize that the activation process will thereafter be executed.

### Correspondence

In the present embodiment, the first preliminary confirmation image and the first final confirmation image correspond to the first confirmation image, and the second preliminary confirmation image and the second final confirmation image correspond to the second confirmation image. Further, in the present embodiment, the HMI 18 installed in the vehicle 10 corresponds to the display unit, and the OTA master 11 mounted in the vehicle 10 corresponds to the control device.

Further, in the present embodiment, the driving power mode corresponds to the first power mode and to a power mode in which the vehicle 10 is in a drivable state. The parking power mode corresponds to the second power mode and to a power mode in which the vehicle 10 is not in a drivable state. Switching from the driving power mode to the parking power mode corresponds to switching of the power mode according to the first switching pattern, and switching from the parking power mode to the driving power mode corresponds to switching of the power mode according to the second switching pattern. Further, the processes of S10 and S14 in Fig. 4 correspond to the first display process for causing the display unit to display the first confirmation image before initiation of the activation process. The process of S18 corresponds to the third display process for causing the display unit to display the first guidance image during execution of the activation process. The process of S20 corresponds to the fifth display process for causing the display unit to display the first completion notification image after completion of the activation process. The processes of S30 and S34 in Fig. 9 correspond to the second display process for causing the display unit to display the second confirmation image, different from the first confirmation image, before initiation of the activation process. The process of S37 corresponds to the fourth display process for causing the display unit to display the second guidance image, different from the first guidance image, during execution of the activation process. The process of S39 corresponds to the sixth display process for causing the display unit to display the second completion notification image, different from the first completion notification image, after completion of the activation process.

### Second Embodiment

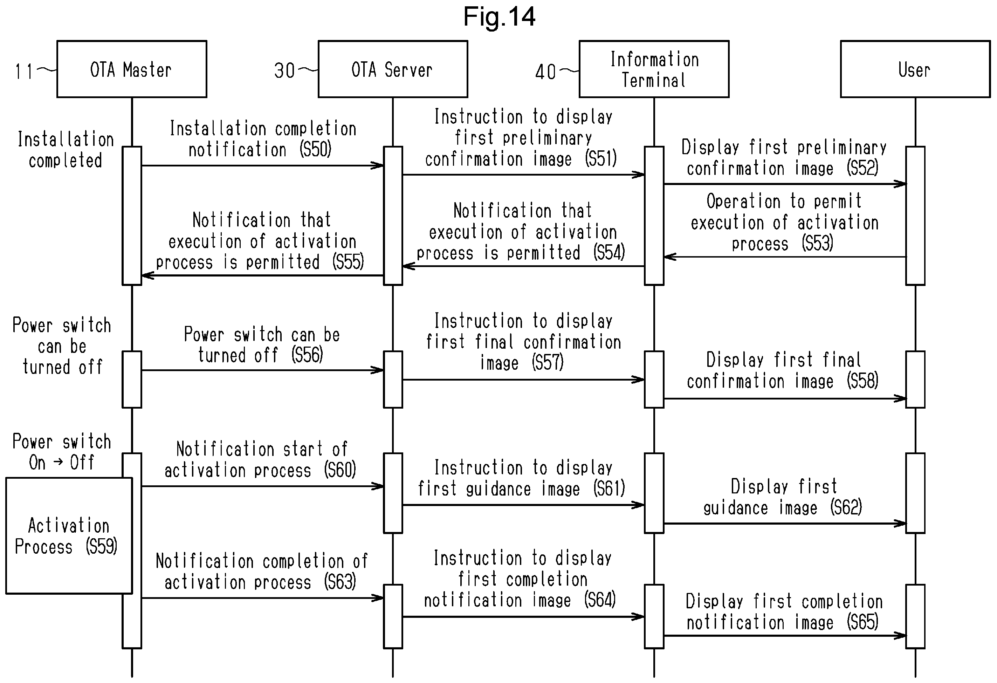

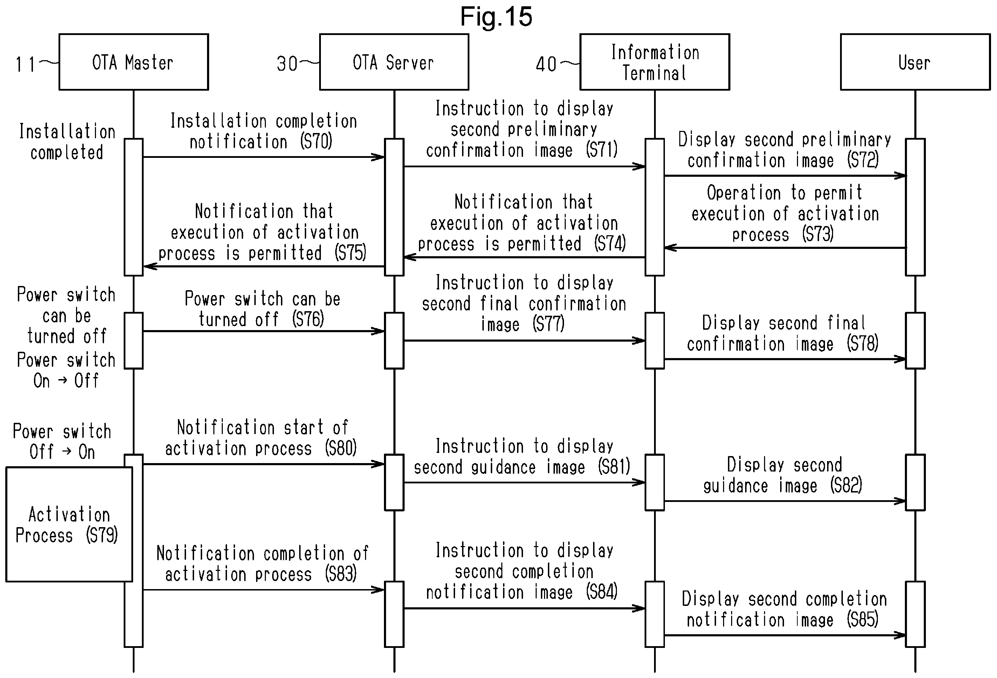

Next, a control device, a control method, a program (program product), and a non-transitory computer-readable storage medium according to a second embodiment will be described with reference to Figs. 14 and 15. The same reference numerals are given to those components in the second embodiment that are the same as the corresponding components of the first embodiment. Such components will not be described in detail.

In the first embodiment, display control of information regarding the software update for the HMI 18 installed in the vehicle 10 is performed by the OTA master 11 mounted in the same vehicle 10. In the second embodiment, information regarding a software update is displayed on the HMI 43 of the information terminal 40 owned by the user of the vehicle 10. Such display control is executed by the OTA server 30 of the data center.

### Activation Process in the First Update Procedure

Fig. 14 illustrates a flow of processes in the activation phase when the software update is performed according to the first update procedure in the second embodiment. As shown in Fig. 14, when the installation phase is completed, the OTA master 11 notifies the OTA server 30 (S50). Upon confirming completion of the installation phase, the OTA server 30 instructs the information terminal 40 to display the first preliminary confirmation image (S51). In response to the instruction, the information terminal 40 displays the first preliminary confirmation image on its HMI 43 (S52). The first preliminary confirmation image displayed on the HMI 43 of the information terminal 40 is similar to that shown in Fig. 5.

When the user performs, on the information terminal 40, an operation selecting permission to execute the activation process (S53), the information terminal 40 notifies the OTA server 30 that execution of the activation process has been permitted (S54). The OTA server 30 further notifies the OTA master 11 of the vehicle 10 that execution of the activation process has been permitted (S55).

Thereafter, when the power switch 24 is in a state in which it can be switched from on to off, the OTA master 11 notifies the OTA server 30 of such state (S56). In response to this notification, the OTA server 30 instructs the information terminal 40 to display the first final confirmation image (S57). In response to the instruction, the information terminal 40 displays the first final confirmation image on its HMI 43 (S58). The first final confirmation image displayed on the HMI 43 of the information terminal 40 is similar to that shown in Fig. 6.

Thereafter, when the power switch 24 is switched from on to off, the OTA master 11 starts the activation process (S59). The OTA master 11 also notifies the OTA server 30 that the activation process has started (S60). Upon confirming that the activation process has started, the OTA server 30 instructs the information terminal 40 to display the first guidance image (S61). In response to the instruction, the information terminal 40 displays the first guidance image on its HMI 43 (S62). The first guidance image displayed on the HMI 43 of the information terminal 40 is similar to that shown in Fig. 7.

When the activation process is completed, the OTA master 11 notifies the OTA server 30 of the completion (S63). Upon confirming completion of the activation process, the OTA server 30 instructs the information terminal 40 to display the first completion notification image (S64). In response to the instruction, the information terminal 40 displays the first completion notification image on its HMI 43 (S65). The first completion notification image displayed on the HMI 43 of the information terminal 40 is similar to that shown in Fig. 8.

### Activation Process in Second Update Procedure

Fig. 15 illustrates a flow of processes in the activation phase when the software update is performed according to the second update procedure in the second embodiment. As shown in Fig. 15, when the installation phase is completed, the OTA master 11 notifies the OTA server 30 of the completion (S70). Upon confirming completion of the installation phase, the OTA server 30 instructs the information terminal 40 to display the second preliminary confirmation image (S71). In response to the instruction, the information terminal 40 displays the second preliminary confirmation image on its HMI 43 (S72). The second preliminary confirmation image displayed on the HMI 43 of the information terminal 40 is similar to that shown in Fig. 10.

When the user performs, on the information terminal 40, an operation selecting permission to execute the activation process (S73), the information terminal 40 notifies the OTA server 30 that execution of the activation process has been permitted (S74). The OTA server 30 notifies the OTA master 11 of the vehicle 10 that execution of the activation process has been permitted (S75).

Thereafter, when the power switch 24 is in a state in which it can be switched from on to off, the OTA master 11 notifies the OTA server 30 of such state (S76). In response to this notification, the OTA server 30 instructs the information terminal 40 to display the second final confirmation image (S77). In response to the instruction, the information terminal 40 displays the second final confirmation image on its HMI 43 (S78). The second final confirmation image displayed on the HMI 43 of the information terminal 40 is similar to that shown in Fig. 11.

Thereafter, when the power switch 24 is switched from on to off and then switched on again, the OTA master 11 starts the activation process (S79). The OTA master 11 also notifies the OTA server 30 that the activation process has started (S80). Upon confirming that the activation process has started, the OTA server 30 instructs the information terminal 40 to display the second guidance image (S81). In response to the instruction, the information terminal 40 displays the second guidance image on its HMI 43 (S82). The second guidance image displayed on the HMI 43 of the information terminal 40 is similar to that shown in Fig. 12.

When the activation process is completed, the OTA master 11 notifies the OTA master 11 of the completion (S83). Upon confirming completion of the activation process, the OTA server 30 instructs the information terminal 40 to display the second completion notification image (S84). In response to the instruction, the information terminal 40 displays the second completion notification image on its HMI 43 (S85). The second completion notification image displayed on the HMI 43 of the information terminal 40 is similar to that shown in Fig. 13.

In the second embodiment, the HMI 43 of the information terminal 40 corresponds to the display unit, and the OTA server 30 corresponds to the control device. The second embodiment achieves operations and advantages similar to, or corresponding to, those of the first embodiment.

### Other Embodiments

The above-described embodiments may be modified as follows. The above-described embodiments and the following modifications can be combined as long as the combined modifications remain technically consistent with each other.

In addition to the display control of the HMI 18 of the vehicle 10 by the OTA master 11 in the first embodiment, display control of the information terminal 40 by the OTA server 30 in the second embodiment may also be performed. In this case, both the OTA master 11 and the OTA server 30 correspond to the control device.

Display control of the HMI 18 of the vehicle 10 in the first embodiment may be performed by the OTA server 30.
Display control of the information terminal 40 in the second embodiment may be performed by the OTA master 11.

An in-vehicle device subject to the software update may perform display control of information regarding the software update.

In the examples of the images shown in Figs. 5 to 8 and Figs. 10 to 13, information is displayed using text. Information may instead be displayed within these images using forms of expression other than text, such as still images or moving images.

The configurations of the first completion notification image (Fig. 8) and the second completion notification image (Fig. 13) may be modified. In the above-described embodiments, information indicating that the power switch 24 has become capable of being switched to on is displayed in the first completion notification image; however, such information may be omitted. Further, in the above-described embodiments, information indicating that functions of the in-vehicle device restricted due to execution of the activation process have become available, specifically, information indicating that the vehicle 10 has become drivable, is displayed in the second completion notification image; however, such display may be omitted. When the user is aware of the content of functional restrictions imposed during execution of the activation process in each of a case in which the software update is performed according to the first update procedure and a case in which the software update is performed according to the second update procedure, the user can, upon knowing which of the first update procedure or the second update procedure was used to perform the software update, identify the functions of the vehicle 10 that will become available upon completion of the activation process. Accordingly, it is sufficient that the first completion notification image and the second completion notification image are configured such that the user can recognize that completion of the activation process is being notified and can distinguish between the two images. With such configurations, it becomes less likely that unexpected functional restrictions associated with the activation process will cause confusion to the user.

A common completion image may be displayed after completion of the activation process regardless of whether the software update is performed according to the first update procedure or the second update procedure.
The completion image after completion of the activation process may be omitted.

The configurations of the first guidance image (Fig. 7) and the second guidance image (Fig. 12) may be modified. For example, display of information regarding the estimated time until completion of the activation process in the first/second guidance image may be omitted, or display of information in the first guidance image indicating that the power switch 24 cannot be switched to on may be omitted. It is sufficient that the first guidance image and the second guidance image are configured such that the user can recognize that the activation process is being executed and can distinguish between the two images.

A common guidance image may be displayed during execution of the activation process regardless of whether the software update is performed according to the first update procedure or the second update procedure.
A guidance image does not need to be displayed during execution of the activation process.

The configurations of the first preliminary confirmation image (Fig. 5) and the second preliminary confirmation image (Fig. 10) may be modified. For example, display of information regarding the estimated time of the activation process in the first/second preliminary confirmation image may be omitted. Further, information different from the illustrated examples may be displayed as information indicating functional restrictions associated with execution of the activation process, or display of such information may be omitted. Further, in a case in which the activation process is automatically executed without obtaining user consent, or in a case in which user consent has already been obtained before completion of the installation phase, the acceptance display for a selection operation as to whether to permit initiation of the activation process may be omitted. It is sufficient that the first guidance image and the second guidance image are configured such that the user can recognize that the activation process is being executed and can distinguish between the two images. The same applies to the first final confirmation image (Fig. 6) and the second final confirmation image (Fig. 11).

In the above-described embodiments, the first/second preliminary confirmation image is displayed upon completion of the installation phase, and the first/second final confirmation image is displayed when the power switch 24 becomes capable of being switched from on to off. Only one of the first/second preliminary confirmation image and the first/second final confirmation image may be displayed.

In the above-described embodiments, the OTA master 11, which manages the software update, performs display control of information regarding the software update. Management of the software update and display control of information regarding the software update may instead be performed by different in-vehicle devices.

In the above-described embodiments, the activation process is executed upon switching from the driving power mode to the parking power mode or upon switching from the parking power mode to the driving power mode. When the power modes of the vehicle 10 include power modes other than these two, the activation process may be executed in response to switching of the power mode according to other switching patterns. When the switching pattern of the power mode for executing the activation process differs, the point in time of execution of the activation process differs, and therefore the point in time and content of functional restrictions of the vehicle 10 associated with such execution also differ. Accordingly, it is desirable to display different confirmation images for each switching pattern of the power mode for executing the activation process. Power modes other than the driving power mode and the parking power mode may include, for example, a power mode that provides, during parking, functions that cannot be provided in a normal parking power mode, such as an entertainment function or an external power supply function. The multiple power modes may include power modes corresponding to an ignition (IG) on state, an accessory power (ACC) on state, and a vehicle power-off state. In the IG on state, the vehicle engine is running, and multiple ECUs are powered on. In the ACC power on state, only some of the ECUs are powered on. This differs from the IG on state. The vehicle power-off state is a state in which power to substantially all ECUs is off.

The control device may be configured as processing circuitry including one or more processors that operate in accordance with a computer program, one or more dedicated hardware circuits that execute at least part of various processes, or a combination thereof. Examples of dedicated hardware include an application specific integrated circuit (ASIC). The processors include a central processing unit (CPU) and a memory such as random-access memory (RAM) and read-only memory (ROM), and the memory stores program codes or instructions configured to have the CPU execute processes. The memory, that is, the storage medium, includes any available medium that can be accessed by a general-purpose or special-purpose computer.

## Claims

1. A control device, comprising processing circuitry, wherein
the processing circuitry is configured to control a display unit configured to display information relating to a software update of an in-vehicle device mounted on a vehicle configured to selectively switch among multiple power modes, the software update including an activation process of enabling update software installed in the in-vehicle device,
the processing circuitry is configured to cause, when the software update is performed according to a first update procedure in which the activation process is executed in response to switching between the power modes in accordance with a first switching pattern, the display unit to display a first confirmation image before the activation process is started,
the processing circuitry is configured to cause, when the software update is performed according to a second update procedure in which the activation process is executed in response to switching between the power modes in accordance with a second switching pattern, the display unit to display a second confirmation image before the activation process is started, and
the first switching pattern and the second switching pattern are different from each other, and the first confirmation image and the second confirmation image are different from each other.

2. The control device according to claim 1, wherein the processing circuitry is configured to display, in the first confirmation image, information indicating a functional restriction of the vehicle associated with execution of the activation process and to display, in the second confirmation image, information different from the information displayed in the first confirmation image as the information indicating the functional restriction.

3. The control device according to claim 1 or 2, wherein the processing circuitry is configured to display, in the first confirmation image, information indicating a period during which a function of the vehicle is restricted due to the execution of the activation process and to display, in the second confirmation image, information indicating a period different from the period displayed in the first confirmation image as the information indicating the period during which the function of the vehicle is restricted.

4. The control device according to any one of claims 1 to 3, wherein each of the first confirmation image and the second confirmation image includes an acceptance display for a selection operation indicating whether to permit start of the activation process.

5. The control device according to any one of claims 1 to 4, wherein the processing circuitry is configured to determine, based on a type of the in-vehicle device to be subjected to the software update, whether the software update is to be performed according to the first update procedure or the second update procedure.

6. The control device according to any one of claims 1 to 5, wherein the processing circuitry is configured to determine, based on a type of software to be subjected to the software update, whether the software update is to be performed according to the first update procedure or the second update procedure.

7. The control device according to any one of claims 1 to 6, wherein the in-vehicle device for which the software update is performed according to the first update procedure and the in-vehicle device for which the software update is performed according to the second update procedure are classified based on a function of the in-vehicle device.

8. The control device according to any one of claims 1 to 7, wherein
the processing circuitry is configured to start, when the software update is performed according to the first update procedure, the activation process of the in-vehicle device in response to the switching between the power modes in accordance with the first switching pattern, and
the processing circuitry is configured to start, when the software update is performed according to the second update procedure, the activation process of the in-vehicle device in response to the switching between the power modes in accordance with the second switching pattern.

9. The control device according to any one of claims 1 to 8, wherein
the switching between the power modes in accordance with the first switching pattern is switching from a first power mode in which the vehicle is able to travel to a second power mode in which the vehicle is not able to travel, and
the switching between the power modes in accordance with the second switching pattern is switching from the second power mode to the first power mode.

10. The control device according to claim 9, wherein
the switching between the power modes in accordance with the first switching pattern is performed in response to switching of a power switch of the vehicle from on to off, and
the switching between the power modes in accordance with the second switching pattern is performed in response to switching of the power switch from off to on.

11. The control device according to claim 9 or 10, wherein the processing circuitry is configured to display, in the first confirmation image, information indicating a predicted time from the switching of the vehicle to the second power mode until switching of the vehicle to the first power mode becomes permitted.

12. The control device according to any one of claims 9 to 11, wherein the processing circuitry is configured to display, in the second confirmation image, information indicating a predicted time from when the switching from the second power mode to the first power mode is instructed until completion of the activation process.

13. The control device according to any one of claims 9 to 12, wherein
the processing circuitry is configured to cause, when the software update is performed according to the first update procedure, the display unit to display a first guidance image during the execution of the activation process, and
the processing circuitry is configured to cause, when the software update is performed according to the second update procedure, the display unit to display a second guidance image different from the first guidance image during the execution of the activation process.

14. The control device according to claim 13, wherein the processing circuitry is configured to display, in the first guidance image, information indicating that the switching of the vehicle to the first power mode is not permitted.

15. The control device according to claim 13 or 14, wherein the processing circuitry is configured to display, in the first guidance image, information indicating a predicted time until the switching of the vehicle to the first power mode becomes permitted.

16. The control device according to any one of claims 13 to 15, wherein the processing circuitry is configured to display, in the second guidance image, information indicating a predicted time until completion of the activation process.

17. The control device according to any one of claims 9 to 16, wherein
the processing circuitry is configured to cause, when the software update is performed according to the first update procedure, the display unit to display a first completion notification image after completion of the activation process, and
the processing circuitry is configured to cause, when the software update is performed according to the second update procedure, the display unit to display a second completion notification image different from the first completion notification image after completion of the activation process.

18. The control device according to claim 17, wherein the processing circuitry is configured to display, in the first completion notification image, information indicating that the switching of the vehicle to the first power mode has become permitted.

19. The control device according to claim 17 or 18, wherein the processing circuitry is configured to display, in the second completion notification image, information indicating that a function of the in-vehicle device restricted due to execution of the activation process has become available.

20. The control device according to any one of claims 9 to 19, wherein
the in-vehicle device is one of multiple in-vehicle devices,
one of the in-vehicle devices for which the software update is performed according to the first update procedure includes a single-bank storage module in which updated software is installed in a storage region storing software before the update, and
another one of the in-vehicle devices for which the software update is performed according to the second update procedure includes a dual-bank storage module in which updated software is installed in a storage region different from a storage region storing software before the update.

21. The control device according to any one of claims 9 to 20, wherein the in-vehicle device for which the software update is performed according to the second update procedure is a data communication module configured for communication outside the vehicle.

22. The control device according to any one of claims 9 to 21, wherein the in-vehicle device for which the software update is performed according to the second update procedure is an advanced driver assistance system.

23. The control device according to any one of claims 9 to 22, wherein the in-vehicle device for which the software update is performed according to the second update procedure is a power control unit of the vehicle.

24. The control device according to any one of claims 1 to 23, wherein the display unit is installed in the vehicle.

25. The control device according to any one of claims 1 to 23, wherein the display unit is provided in an information terminal independent of the vehicle.

26. The control device according to any one of claims 1 to 25, wherein the control device is a server device independent of the vehicle.

27. A vehicle, comprising the control device according to any one of claims 1 to 25.

28. A control method, comprising:
controlling a display unit that displays progress information relating to a software update of an in-vehicle device mounted on a vehicle configured to selectively switch among multiple power modes, the software update including an activation process of enabling update software installed in the in-vehicle device;
causing, when the software update is performed according to a first update procedure in which the activation process is executed in response to switching between the power modes in accordance with a first switching pattern, the display unit to display a first confirmation image before the activation process is started; and
causing, when the software update is performed according to a second update procedure in which the activation process is executed in response to switching between the power modes in accordance with a second switching pattern, the display unit to display a second confirmation image before the activation process is started,
wherein the first switching pattern and the second switching pattern are different from each other, and the first confirmation image and the second confirmation image are different from each other.

29. A program that causes, when executed by a control device, the control device to execute:
a control process of controlling a display unit that displays progress information relating to a software update of an in-vehicle device mounted on a vehicle configured to selectively switch among multiple power modes, the software update including an activation process of enabling update software installed in the in-vehicle device;
a first display process of causing, when the software update is performed according to a first update procedure in which the activation process is executed in response to switching between the power modes in accordance with a first switching pattern, the display unit to display a first confirmation image before the activation process is started; and
a second display process of causing, when the software update is performed according to a second update procedure in which the activation process is executed in response to switching between the power modes in accordance with a second switching pattern, the display unit to display a second confirmation image before the activation process is started,
wherein the first switching pattern and the second switching pattern are different from each other, and the first confirmation image and the second confirmation image are different from each other.
